# EUROPEAN PATENT SPECIFICATION

(11) **EP 0 492 765 B1**
(45) Date of publication and mention of the grant of the patent: **04.10.1995**
(21) Application number: 91306097.6
(22) Date of filing: 04.07.1991
(51) Int. Cl.: A23L 3/365, A21D 6/00, A23B 4/07, A21C 13/00

(54) **Process for thawing, maturing and fermenting frozen dough for preparing bread**
Verfahren zum Auftauen, Reifen und Gären von gefrorenen Teiglingen zum Herstellen von Brot
Procédé pour la décongélation, la maturation et la fermentation de pâtes pour la préparation de pain

(30) Priority: 31.10.1990 JP 294886/90
(43) Date of publication of application: 01.07.1992
(73) Proprietor: Otsuki, Tatsukiyo, Okayama-shi (JP)
(72) Inventor: Otsuki, Tatsukiyo, Okayama-shi (JP)
(74) Representative: Molyneaux, Martyn William

(56) References cited:
- EP-A- 0 409 430
- FR-A- 982 441
- FR-A- 991 697
- FR-A- 1 385 523
- FR-A- 2 230 152
- GB-A- 139 100
- US-A- 3 573 067
- US-A- 4 343 979

## Description

The present invention relates to a process for thawing, maturing and fermenting a frozen dough for preparing bread.

In general, in the production of a foodstuff, particularly in thawing, maturing and fermenting a frozen dough, it is important to maintain humidity in a container for the foodstuff at an appropriate level.

In order to keep the humidity at a desired level, it is known to use a humidifier employing an automatic water supply and an electric heater (Japanese Patent Publication No. 42805/1980). In such an apparatus, the water molecules have a large molecular mass (large droplets).

On the other hand, the present Applicant's Japanese Patent Application Kokai (Laid-Open) No. 168833/1989 discloses that water having small droplets, improves the freshness-retaining, maturing and water holding capacities of foodstuffs.

When frozen dough is thawed under an atmospheric condition or under a heating condition, the dough is dried rapidly and thus needs to be fermented and baked soon after thawing in order to obtain delicious bread. Therefore, when a conventional fermentor is used, it was necessary to remove frozen dough from a refrigerator and transfer it into the fermentor, so that bread manufacturers were compelled to work early in the morning. In this connection, it is known to use a dough conditioner having both functions of freezing and fermentation, but even in such an apparatus thawing is conducted by heat exchange and occurs gradually from the surface of the dough into the inner part, so that homogeneous thawing cannot be obtained. Furthermore, the apparatus requires a high humidity atmosphere, and thus it is impossible to produce voluminous and tall bread or bread having a low fat content by using such frozen dough.

Low fat foods having low stability upon freezing and thawing, such as so-called traditional bread which is produced from yeast and wheat flour, for example French breads, German breads or the like have a problem that they cannot be conventionally produced from a frozen dough.

On the other hand, when sweet baked products such as goods containing a bean-jam or a cream are subjected to humidity, the surface of the finished product is sticky. Moreover, such products have the problem that they have only a low bonding power due to the moisture and when the moisture is eliminated, the product is significantly degraded.

Voluminous and tall bread such as normal bread or "double soft" type bread, namely, bread which is baked under relatively lower temperature and is very soft and full, in which glucose etc. is used instead of sucrose as a sweetener, are conventionally produced only by the addition of a considerable amount of sugar, and it is desired to have a bread having a low sugar content for health reasons.

According to this invention there is provided a process for producing a bread comprising applying a negative electron to a dough within a container by a negative electron generator which is connected to a conductive part within said container through a conductor.

The invention will now be described, by way of example, with reference to the accompanying drawings in which:
Figure 1 is a schematic illustration of a thawing, maturation and fermentation container used in the process of the present invention.
Figure 2 is an electrical diagram of a negative electron generator used in the container of Figure 1.

A thawing, maturation and fermentation container 10 used in the present invention has a conductive wall 5 which is electrically insulated from external circumstances by an insulator 6. The container itself is also insulated electrically from earth potential. A shelf 9 made of an electroconductive material, preferably an iron or stainless steel plate is provided within the container. A negative electron generator 1 is provided outside the container. The foodstuffs 8 are placed within the container and bread is placed on the shelf. A refrigerator 2, a heater 4 and a fan 3 may be provided outside the container and insulated from earth potential. The heater 4 is connected to a circulation member 7 extending within the container.

The negative electron generator 1 is, for example, a high voltage inductive transformer, in which an electrode at the secondary high voltage side is insulated and another electrode is connected to the inside of the container such as the shelf 9 made of an electroconductive metal through a conductor.

A high voltage in the range of 10,000 - 15,000V is applied to the inside of the container. The operation can be thus conducted at a temperature of -3°C in a food production process such as a thawing process. In the conventional method, such operation was conducted at a temperature above 0°C.

The inside of the container is maintained at a humidity of 85% or more by the activity of negative electrons by the use of high voltage electrostatic induction. In general, thawing, maturation and fermentation of dough should be conducted by maintaining the humidity at 85% or more for maintaining the freshness of the food. A humidifier which was essential to the conventional apparatus is not required in the present invention, because the inside of the container can be maintained at a humidity of 85% or more by the activity of the negative electrons generated by high voltage electrostatic induction.

Negative electrons are applied to the inside of the container and the food by the negative electron generator 1.

The negative electron generating condition in the present invention is preferably produced by a current in the range of 0.02A - 0.3A per 1m² of the area of the electrode in the primary side of 100V of a high voltage transformer with the secondary voltage for satisfying the primary voltage being required to be in the design range of 5,000 - 20,000V. The negative electron generating condition is controlled by the primary current. However, if the primary current is less than 0.02A, the advantageous effect of the present invention is diminished. If the primary current is above 0.3A, the effect is not increased by much.

In the present process, each thawing, maturation and fermentation process can be conducted continuously with use of a timer, because thawing can be conducted at -3°C and foodstuffs can, therefore, be stored for a long time due to suppression of the growth of microorganisms, such as baker's yeast, so it is not necessary to proceed directly to maturation and fermentation processes.

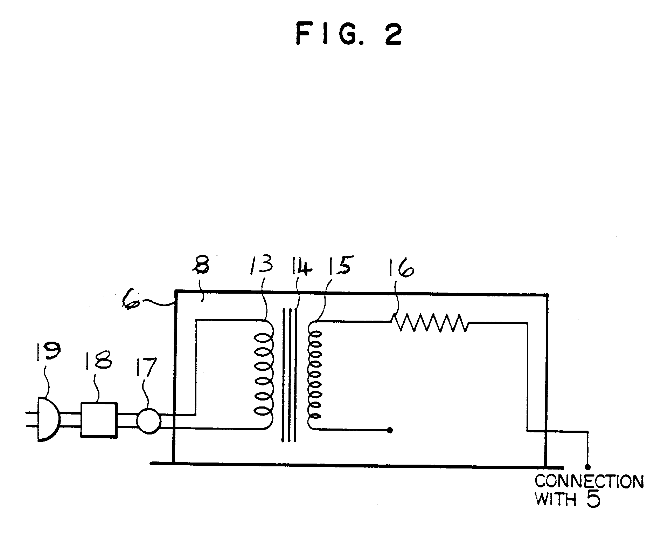

A method of generating negative electrons by electrostatic induction in the present invention is described in detail with reference to Figure 2. This generating method of negative electrons is to form a field of high voltage, namely high electric potential without current flow. The negative electron generator comprises a high voltage electrostatic transformer 8 supplied by a single-phase alternating current of 100V, frequency 50 or 60Hz at the primary side (lower voltage side) thereof. The diameter of wire of the primary coil 13 is preferably 0.2 to 1.0mm. The current value of the primary coil is ordinarily designed to regulate 0.02 to 0.3A. The current value of the primary side is mostly based on the number of wire turns of the primary coil and the density of magnetic flux of the core.

The ratio of the number of the wire turns between the primary side and the secondary side separated by cone 14 is regulated so that 5,000 to 20,000V may be obtained at the secondary side (higher voltage side). In this case, the wire diameter of the secondary coil 15 is preferably 0.04 to 0.09mm. One electrode at the secondary side is insulated which results in formation of only voltage and inhibition of electrical current flow, thereby the field of high potential may be made.

The other electrode of the secondary coil is connected with the case wall 5. In this case, the conductive portion of the case wall 5 must be completely insulated from all external fitments and earth potential. If the wall is earthed, connecting with other objects, the design should be achieved so that electrical current does not flow by designing the output resistor 16 to have a high resistance.

The insulating case 6 and an insulating resin (not shown) protect the high voltage transformer and insulate the transformer and one of the electrodes at the secondary side (high voltage side).

Connected across the primary coil is a pilot lamp 17, which is an operating lamp, and safety circuit breaker 18.

Although the process of the present invention exhibits the water-retention of food in its use for only the fermentation process, the water-retention of food can also be promoted by the use of the process of the present invention for the thawing and maturation processes. The process of the present invention has been mainly described referring to the production of bread, and it will be understood to a person skilled in the art that the process of the present invention can be applied to any food which requires thawing, maturation and fermentation processes.

Although the application of a high voltage (10,000 - 15,000V) to the inside of the container results in a variety of advantageous effects such as:
1) freshness-maintenance (particularly effective for protein and fat);
2) possibility of thawing at a temperature of -3°C; and
3) water-retaining capacity (the inside of the container can be maintained at a humidity of 85% or more, and the moisture is natural water, that is, of small droplets, so that it is brisk in motion, binds strongly to food components and suffers little vaporized. However, the mechanism of its action still remains largely unclear.

The present invention is illustrated by an example.

### Example and Comparative Example.

### Apparatus of the invention

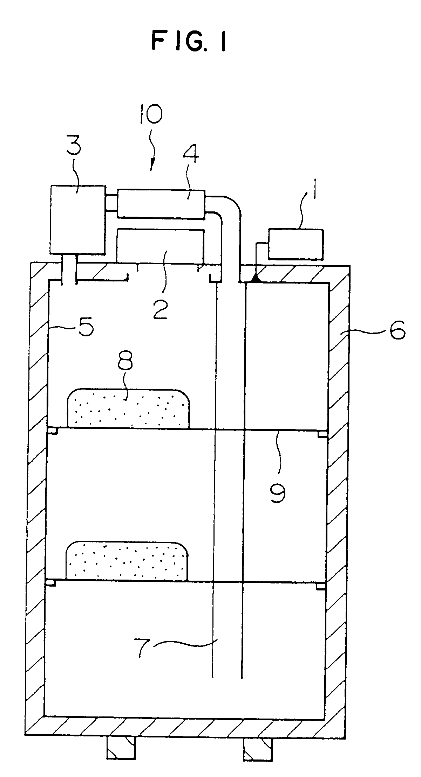

There was used as the apparatus of the invention an apparatus manufactured by SANTETSU K.K. which was equipped with a heater having a capacity of 0.5KW and a freezer having a capacity of 0.15KW and had an external size of 960 x 750 x 1,880mm. Figure 1 is a schematic illustration of a thawing, maturation and fermentation container 10, in which the inside of the container is completely electrically insulated from the external surroundings, a generator 1 comprising a high voltage inductive transformer 8 is provided on the upper part of the container, and an electrode at the secondary high voltage side is connected to the inside of the container to ensure that negative electrons can be applied. The inside 5 of the container and the shelf 9 were connected to each other to form a communication circuit.

### Conventional apparatus

There were used, as comparative examples, a dough conditioner as a conventional apparatus A which was equipped with a heater having a capacity of 2.7KW and a freezer having a capacity of 3/4HP and which apparatus had an external size of 900 x 1,000 x 2,330mm; and a fermentator as a conventional apparatus B equipped with a heater having a capacity of 1KW and having an external size of 770 x 975 x 22,000mm. Breads were then produced with use of the apparatus of the present invention and the conventional apparatuses A and B.

### Thawing condition

Thawing conditions were as follows:

| | Temperature °C | Humidity % | Thawing time hour |
|---|---|---|---|
| Apparatus of the present invention | -3 | 90 | 6 |
| Conventional apparatus A | +3 | 85 | 6 |
| Conventional apparatus B | 20 | 60 | 2 |

### Fermentation condition

Fermentation conditions were as follows:

| | Temperature °C | Humidity % | Fermentation time hour |
|---|---|---|---|
| Apparatus of the present invention | 37 | 90 | 40 |
| Conventional apparatus A | 32 | 85 | 60 |
| Conventional apparatus B | 32 | 85 | 60 |

Results are shown below.

Thawed doughs were evaluated on the points of handling ability and extensibility, and finished breads were evaluated on the points of appearance, body, colour, texture and shelf stability as well as the combined judgment.

Evaluation was conducted, as shown below, by a four-grade evaluation method as an empirical evaluation.
- ⓞ: very good,
- ○: good,
- △: medium,
- X: inferior.

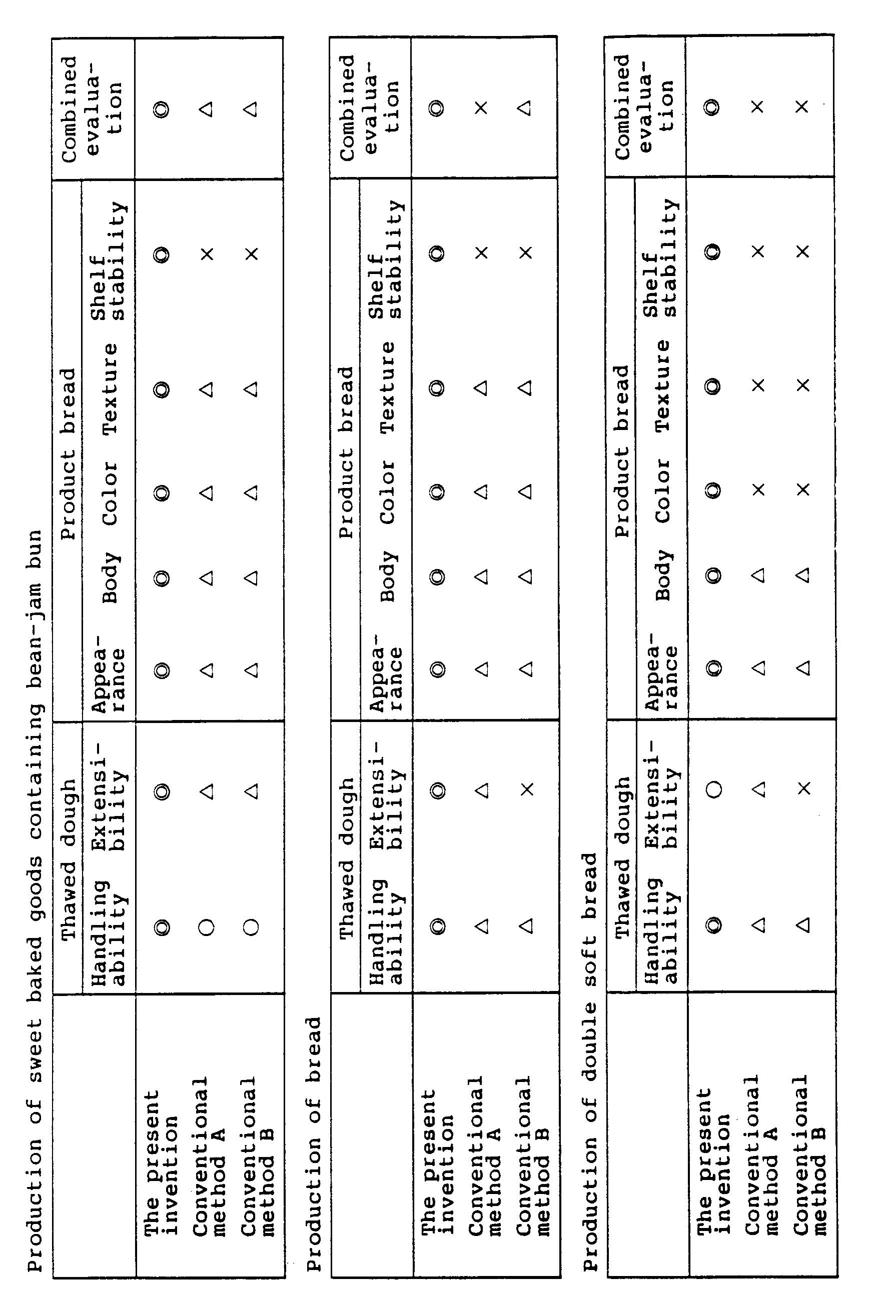

## Claims

1. A process for producing a bread comprising applying a negative electron to a dough within a container (10) by a negative electron generator (1) which is connected to a conductive part (5) within said container through a conductor.

2. A process as claimed in claim 1 wherein said container has an electrically conductive inner wall forming said conductive part (5) which is electrically insulated from external surroundings and said inner wall is applied with a voltage in the range 10,000 volts to 15,000 volts.

3. A process as claimed in claim 1 or 2 wherein, in a thawing process, the operation is conducted at a temperature in the container of about -3°C.

4. A process as claimed in any preceding claim wherein humidity in the container is maintained at about 85% or more by the activity of the negative electrons.

5. A process as claimed in claim 1 used for thawing, maturing or fermenting a frozen dough for bread.

6. A process as claimed in any preceding claim wherein said electron generator comprises a high voltage electrostatic transformer (8) having a single phase alternating current of about 100V at a primary coil thereof and about 5,000V to 20,000V at a secondary thereof.

7. A process as claimed in claim 6 wherein the wire of the primary coil has a diameter of 0.2 to 1.0mm.

8. A process as claimed in claim 6 or 7 wherein the wire of the secondary coil has a diameter of 0.04 to 0.09mm.

9. A process as claimed in any preceding claim wherein said container (10) is further provided with a refrigerator (2), a heater (4) and a fan (3).

## Patentansprüche

1. Verfahren zur Herstellung von Brot, bei dem ein Teigling in einem Behälter (10) mit Hilfe eines Generators (1) für negative Elektronen mit negativen Elektronen beaufschlagt wird, wobei der Generator über einen Leiter mit einem leitenden Teil (5) in dem Behälter verbunden ist.

2. Verfahren nach Anspruch 1, bei dem der Behälter eine elektrisch leitende Innenwand besitzt, die den leitenden Teil (5) bildet, der gegen die Außenumgebung elektrisch isoliert ist, und bei dem die Innenwand mit einer Spannung im Bereich von 10.000 Volt bis 15.000 Volt beaufschlagt wird.

3. Verfahren nach Anspruch 1 oder 2, bei dem in einem Auftauverfahren der Vorgang bei einer Temperatur in dem Behälter von etwa -3°C durchgeführt wird.

4. Verfahren nach einem der vorhergehenden Ansprüche, bei dem die Feuchtigkeit in dem Behälter durch die Aktivität der negativen Elektronen auf etwa 85% oder mehr gehalten wird.

5. Verfahren nach Anspruch 1, das zum Auftauen, Reifen oder Gären eines gefrorenen Teiglings für Brot verwendet wird.

6. Verfahren nach einem der vorhergehenden Ansprüche, bei dem der Elektronengenerator einen elektrostatischen Hochspannungstransformator (8) umfaßt, der einen einphasigen Wechselstrom von etwa 100 V an einer Primärspule und von etwa 5.000 V bis 20.000 V an einer Sekundärspule besitzt.

7. Verfahren nach Anspruch 6, bei dem der Draht der Primärspule einen Durchmesser von 0,2 bis 1,0 mm besitzt.

8. Verfahren nach Anspruch 6 oder 7, bei dem der Draht der Sekundärspule einen Durchmesser von 0,04 bis 0,09 mm besitzt.

9. Verfahren nach einem der vorhergehenden Ansprüche, bei dem der Behälter (10) des weiteren mit einer Kühlvorrichtung (2), einer Heizvorrichtung (4) und einem Gebläse (3) versehen ist.

## Revendications

1. Procédé pour produire un pain comprenant l'application d'un électron négatif à une pâte dans un conteneur (10) par un générateur d'électrons négatifs (1) qui est connecté à une partie conductrice (5) dans ledit conteneur par un conducteur.

2. Procédé selon la revendication 1, dans lequel ledit conteneur a une paroi interne électriquement conductrice formant ladite partie conductrice (5) qui est isolée électriquement de l'environnement extérieur et ladite paroi interne se voit appliquer une tension dans la gamme de 10.000 volts à 15.000 volts.

3. Procédé selon la revendication 1 ou 2, dans lequel, dans un processus de décongélation, l'opération est menée à une température dans le conteneur d'environ -3° C.

4. Procédé selon l'une quelconque des revendications précédentes, dans lequel l'humidité dans le conteneur est maintenue à environ 85 % ou plus, par l'activité des électrons négatifs.

5. Procédé selon la revendication 1, utilisé pour la décongélation, la maturation ou la fermentation d'une pâte à pain gelée.

6. Procédé selon l'une quelconque des revendications précédentes, dans lequel ledit générateur d'électrons comprend un transformateur (8) électrostatique haute tension ayant un courant alternatif monophasé d'environ 100 V à sa bobine primaire et d'environ 5.000 V à 20.000 V à sa bobine secondaire.

7. Procédé selon la revendication 6, dans lequel le fil de la bobine primaire a un diamètre de 0,2 à 1,0 mm.

8. Procédé selon la revendication 6 ou 7, dans lequel le fil de la bobine secondaire a un diamètre de 0,04 à 0,09 mm.

9. Procédé selon l'une quelconque des revendications précédentes, dans lequel ledit conteneur (10) est de plus pourvu d'un réfrigérateur (2), d'un chauffage (4) et d'un ventilateur (3).
